# FASCICULE DE BREVET EUROPEEN

(11) **EP 2 800 678 B1**
(45) Date de publication et mention de la délivrance du brevet: **05.04.2017**
(21) Numéro de dépôt: 12815687.4
(22) Date de dépôt: 20.12.2012
(51) Int. Cl.: B60R 11/02, H04R 1/02

(54) **JOINT D'ETANCHEITE LINEAIRE ET AGENCEMENT D'UN TEL JOINT ENTRE UNE GARNITURE DE PORTE ET UN HAUT-PARLEUR DE VEHICULE AUTOMOBILE**
LINEARDICHTUNG UND ANORDNUNG EINER SOLCHEN DICHTUNG ZWISCHEN EINER TÜRVERKLEIDUNG UND EINEM LAUTSPRECHER EINES KRAFTFAHRZEUGS
LINEAR SEAL AND ARRANGEMENT OF SUCH A SEAL BETWEEN A DOOR LINING AND A LOUDSPEAKER OF A MOTOR VEHICLE

(30) Priorité: 04.01.2012 FR 1250079
(43) Date de publication de la demande: 12.11.2014
(73) Titulaire: Renault S.A.S., 92100 Boulogne-Billancourt (FR)
(72) Inventeur: JOSSE, Pascal, F-78500 Sartrouville (FR); GOLINELLI, Mathieu, F-78960 Voisins Le Bretonneux (FR)
(86) Numéro de dépôt international: PCT/EP2012/076487
(87) Numéro de publication internationale: WO 2013/102579

(56) Documents cités:
- DE-A1- 2 920 836
- DE-A1-102011 102 640
- US-A- 4 852 178

## Description

L'invention concerne un joint d'étanchéité linéaire présentant une section rectangulaire constante sur sa longueur et l'agencement d'un tel joint entre une garniture de porte de véhicule automobile et un haut-parleur.

Dans le cas d'un panneau de porte où l'étanchéité entre un caisson de porte et une garniture de porte est assurée par un cordon de colle périphérique, il est possible que de l'eau pénètre à l'intérieur du panneau de porte entre le caisson et la garniture.

Cependant lorsqu'un haut-parleur est monté directement sur le caisson en regard d'une grille portée par la garniture de porte, il y a un risque pour que de l'eau provenant du caisson ruisselle entre la membrane du haut-parleur et la grille, ce qui pourrait entrainer une détérioration du haut-parleur.

Il est donc nécessaire de prévoir un joint entre le haut-parleur et la garniture de porte.

Les joints couramment utilisés pour l'étanchéité de haut-parleurs sont généralement de type « couronne circulaire » dont le diamètre est identique au diamètre extérieur de la membrane de haut-parleur.

Cependant ce type de joint présente des inconvénients car la matière située au centre de la couronne est perdue lors de sa fabrication, ce qui en augmente le coût de fabrication.

Il existe aussi des joints dits « à retourner ». Ce type de joint, avant d'être retourné, se présente sous la forme de deux segments reliés ensemble et comportant sur leur pourtour externe, des échancrures de forme triangulaire. Une fois retourné, c'est-à-dire une fois que le pourtour extérieur du joint est tourné vers l'intérieur, le joint présente alors la forme d'une couronne. Ce type de joint présente l'avantage d'être découpé à plat ce qui limite les pertes de matières lors de la fabrication. Il présente cependant l'inconvénient d'avoir des défauts d'étanchéité en raison de la présence des échancrures périphériques, Un agencement à l'intérieur d'un véhicule de moyens d'étanchéité selon le préambule est connu du US 4852178A.

Afin de pallier ces inconvénients, l'invention a pour objet un joint d'étanchéité efficace et peu coûteux.

L'invention a aussi pour objet l'agencement de moyens d'étanchéité comprenant un tel joint entre un haut-parleur et une garniture de porte.

A cet effet, l'invention propose un joint du type cité ci-dessus, caractérisé en ce que le joint présente une première extrémité comportant sur une première face du joint une première marche et un premier pan biseauté et une deuxième extrémité comportant également sur une deuxième face, opposée à la première face, une deuxième marche et un deuxième pan biseauté, les extrémités étant aptes à coopérer l'une avec l'autre pour former un joint circulaire.

Selon une autre caractéristique de l'invention:
Les extrémités comportent en outre, entre la marche et le pan biseauté, une zone intermédiaire dont la surface est comprise dans un plan sensiblement parallèle aux première et deuxième faces du joint.

L'invention concerne également un agencement à l'intérieur d'un véhicule automobile de moyens d'étanchéité entre un haut-parleur et une garniture de porte comprenant un joint d'étanchéité dans lequel le joint est disposé entre un élément périphérique du haut-parleur et la garniture de porte, la garniture comportant, autour d'une grille de haut-parleur, une nervure interne et une nervure externe globalement circulaires concentriques entre lesquelles est reçu le joint d'étanchéité, les nervures internes et externes comportant une zone localisée conformée pour assurer le maintien des extrémités du joint.
- La zone de maintien des extrémités du joint est délimitée par un élément formant saillie, présentant une rampe orientée selon une tangente en un point de la nervure interne situé à la limite de la zone de maintien et une paroi orientée selon un rayon de la nervure interne et par une butée formée sur une face externe de la nervure externe, à distance de l'élément en saillie, la zone de maintien comportant en outre une déformation de la nervure externe débutant, sensiblement en regard de la rampe de l'élément en saillie, par un bossage dirigé vers l'extérieur qui s'étend le long de nervure externe jusqu'à la butée de façon que la zone de maintien soit apte à accueillir les extrémités du joint en compression l'une contre l'autre.

Selon d'autres caractéristiques de l'invention :
- Dans la zone de maintien
   - la première extrémité et la deuxième extrémité du joint sont en appui l'une contre l'autre, la première extrémité étant en contact avec la nervure interne et la deuxième extrémité étant en contact avec le bossage de la nervure externe et une première paroi terminale de la première extrémité étant en appui contre la paroi de l'élément en saillie et une deuxième paroi terminale de la deuxième extrémité étant en appui contre la butée,
   - une première partie de contact de la première extrémité située en amont de la première marche de la première extrémité est en appui contre le deuxième pan biseauté de la deuxième extrémité et une deuxième partie de contact du joint située en amont de la deuxième marche de la deuxième extrémité est en appui contre le premier pan biseauté de la première extrémité,
   - une portion de la deuxième face du joint située en amont de la deuxième partie de contact de la deuxième extrémité est en appui contre la rampe de l'élément en saillie.
   - La dimension de l'espace entre la nervure interne et la nervure externe en dehors de la zone de maintien est sensiblement égale à l'épaisseur du joint.
   - La dimension la plus grande entre la nervure interne et la nervure externe dans la zone de maintien est sensiblement égale à la somme de l'épaisseur du joint en dehors de ses extrémités et de l'épaisseur du joint au niveau du pan biseauté.
   - L'élément périphérique du haut-parleur situé en regard de la nervure interne et de la nervure externe, comporte une zone d'appui annulaire destinée à coopérer avec une face latérale du joint.
   - La zone d'appui annulaire comporte au moins une nervure qui s'étend sensiblement perpendiculairement par rapport à la zone d'appui qui est destinée à pénétrer dans la face latérale du joint pour le mettre en surpression.
   - La garniture comporte une paroi circulaire s'étendant sensiblement perpendiculairement par rapport à la garniture en regard du joint et de l'élément périphérique du haut-parleur de façon à limiter un ruissellement d'eau à l'intérieur du haut-parleur.

D'autres caractéristiques et avantages de l'invention apparaîtront à la lecture de la description d'exemples de réalisation d'un joint d'étanchéité et d'un agencement de moyens d'étanchéité en référence aux dessins annexés dans lesquels :
- La figure 1 est une vue en perspective d'un joint d'étanchéité selon l'invention d'un premier type en position dépliée.
- La figure 2 est une en perspective d'un joint d'étanchéité selon l'invention d'un second type.
- La figure 3 est une vue de face d'une garniture de porte représentée sans le joint d'étanchéité selon l'invention.
- La figure 4 est une vue de face d'une garniture de porte représentée avec le joint d'étanchéité selon l'invention.
- La figure 5 est une vue en coupe de la garniture de porte et du joint de la figure 3 ainsi que d'un haut-parleur et du joint en position montée.

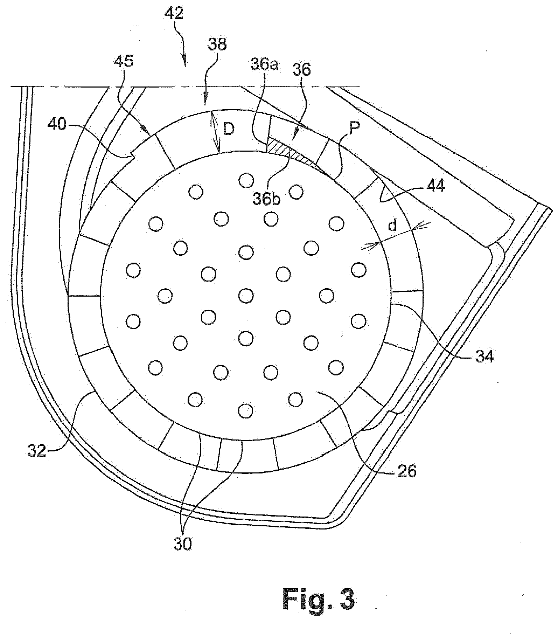

Dans la description qui suit, nous prendrons à titre non limitatif une orientation longitudinale, verticale et transversale indiquée par le trièdre L,V,T des figures 3 à 5.

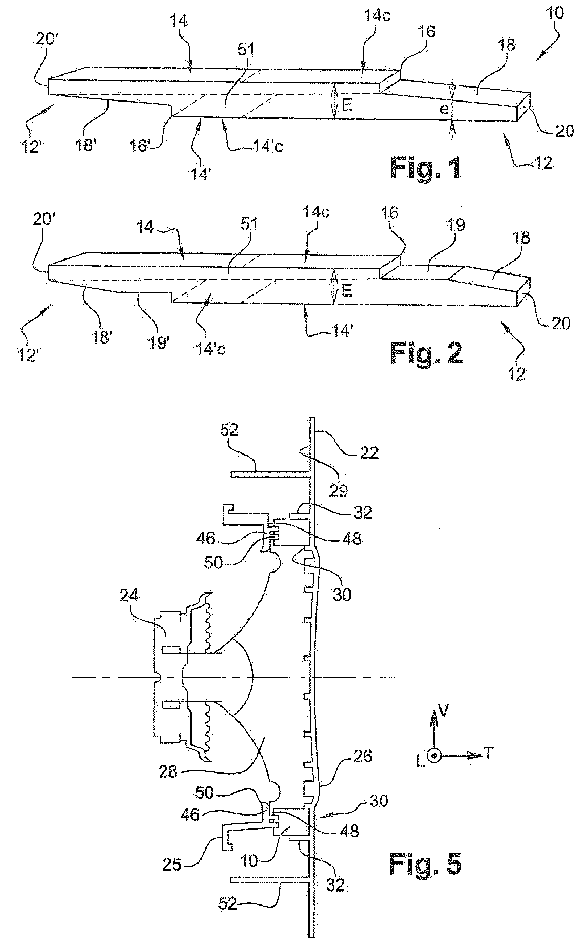

Tel que représenté à la figure 1, un joint d'étanchéité 10 déplié présente sur toute sa longueur une section rectangulaire constante, à l'exception de sa première extrémité 12 et de sa deuxième extrémité 12'.

La première extrémité 12 du joint 10 présente, sur une première face 14 du joint 10, une première marche 16 orientée perpendiculairement par rapport à un axe longitudinal ℓ du joint. La première marche 16 est suivie par un premier pan biseauté 18 s'achevant par une première paroi terminale 20 d'orientation transversale par rapport à l'axe longitudinal ℓ du joint 10. En amont de la marche 16, la première face 14 comporte une partie appelée première partie de contact 14c dont la longueur est sensiblement égale à la longueur du pan biseauté 18.

La première extrémité 12 du joint 10 correspond donc à une portion du joint comportant la première partie de contact 14c, la première marche 16, le pan biseauté 18 et la première paroi terminale 20.

La deuxième extrémité 12' du joint 10 présente sur une deuxième face 14' du joint 10, opposée à la première face 14, une deuxième marche 16' suivie par un deuxième pan biseauté 18' s'achevant par une paroi terminale 20' d'orientation transversale par rapport à l'axe longitudinal ℓ du joint 10. En amont de la marche 16', la deuxième face 14' présente une partie appelée deuxième partie de contact 14c dont la longueur est sensiblement égale à celle du pan biseauté 18'.

La deuxième extrémité 12' du joint 10 correspond donc à la partie comportant la deuxième partie de contact 14'c, la deuxième marche 16', le pan biseauté 18' et la deuxième paroi terminale 20'

Tel que représenté à la figure 2, dans le cas d'un joint 10 selon un autre mode de réalisation, à chaque extrémité 12,12' est intercalée entre la marche 16,16' et le pan biseauté 18,18' une zone intermédiaire 19,19' dont la surface est sensiblement parallèle aux faces 14 et 14' du joint 10.

Tel que représenté aux figure 3 à 5, le joint 10 décrit à la figure 1 est agencé entre une garniture de porte 22 et un haut-parleur 24 fixé sur un caisson de porte non représenté. Le haut-parleur 24 comporte une membrane 28 entourée d'une partie périphérique circulaire 25.

La garniture 22 comporte une grille 26 se présentant sous la forme d'un disque perforé de multiples trous apte à être placée en vis-à-vis de la membrane 28 du haut-parleur 24.

Les diamètres de la grille 26 et de la membrane 28 sont sensiblement égaux.

Tel que représenté à la figure 3, une face interne 29 de la garniture 22 présente une nervure interne circulaire 30 et une nervure externe circulaire 32 concentriques s'étendant sensiblement perpendiculairement au plan de la garniture 22 tout autour de la grille 26.

Une face externe 34 de la nervure interne 30 présente un élément localisé 36 formant saillie présentant une paroi 36a s'étendant sensiblement selon un rayon du cercle formée par la nervure interne 30 et une rampe 36b s'étendant selon une tangente à la nervure interne 30.

Dans une zone sensiblement en regard de l'élément en saillie 36, la nervure externe 32 se déforme progressivement vers l'extérieur pour former un bossage localisé 38 le long de la nervure externe 32. Ainsi, le bossage 38 débute en regard de l'élément en saillie 36 et s'achève à distance de l'élément en saillie 36 par une marche formant une butée 40 à la surface externe 45 de la nervure externe 32.

La zone 42 comportant le bossage 38 et délimitée d'une part par le point de contact P de la rampe 36b de l'élément 36 avec la nervure interne 30 et d'autre part par la butée 40 forme ainsi une zone permettant d'assurer le maintien serré des extrémités 12 et 12' du joint 10.

La dimension de l'espace entre les nervures interne 30 et externe 32 dans la zone de maintien est donc supérieure à la dimension d de l'espace entre la nervure interne 30 et la nervure externe 32 en dehors de la zone de maintien 42.

La dimension la plus grande D de l'espace entre la nervure interne 30 et la nervure externe 32 correspond sensiblement à la somme de l'épaisseur E du joint 10 en dehors des extrémités 12 et 12' et de l'épaisseur e du joint 10 au niveau du plan biseauté 18.

En-dehors de la zone comportant le bossage 38, la butée 40 et l'élément en saillie 36, la distance d entre la nervure interne 30 et la nervure externe 32 est constante.

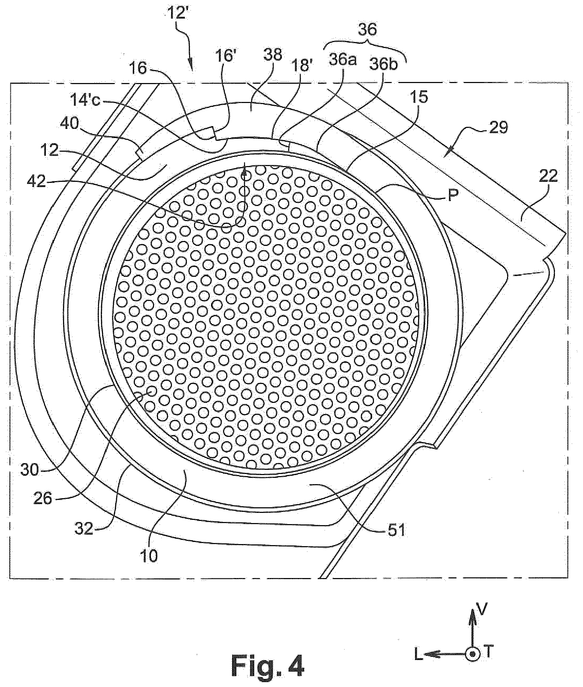

Tel que représenté à la figure 4, le joint 10 est donc inséré entre les nervures interne 30 et externe 32 selon le procédé suivant :
Dans une première étape, la paroi terminale 20 de la première extrémité 12 est mise en appui contre la paroi 36a de l'élément en saillie 36.

Dans une deuxième étape, le reste du joint 10 est inséré entre les nervures interne 30 et externe 32, la première face 14 du joint 10 étant en contact avec une face interne 44 de la nervure externe 32 et la deuxième face 14' du joint 10 étant en contact avec la face externe 34 de la nervure interne 30.

Dans une troisième étape, au début de la zone de maintien 42 des extrémités 12 et 12', une partie 15 de la deuxième face 14' du joint 10 est mise en appui contre la rampe 36b de l'élément en saillie 36 puis la partie de contact 14'c de la deuxième face 14' est mise en appui contre le pan biseauté 18 de la première extrémité 12. La partie 15 de la deuxième face 14' est donc située en amont de la deuxième partie de contact 14'c.

Le plan biseauté 18' de la deuxième extrémité 12' est en mis en appui contre la première partie de contact 14c de la première face 14 du joint, la paroi terminale 20' étant en appui contre la butée 40.

Les marches 16 et 16' sont alors en contact l'une avec l'autre.

Dans toute la zone de maintien 42, la première face 14 du joint au niveau de la deuxième extrémité 12' est en appui contre la face interne 44 de la nervure externe 32.

La dimension la plus grande D de l'espace entre la nervure interne 30 et la nervure externe 32 correspondant sensiblement à la somme de l'épaisseur du joint en dehors des extrémités et de l'épaisseur du joint au niveau du plan biseauté 18, les extrémités 12 et 12' sont alors montées serrées entre les nervures interne 30 et externe 32.

Les extrémités 12 et 12' du joint 1 ainsi maintenues sont donc étanches et ne laissent pas pénétrer d'eau.

Tel que représenté à la figure 5, le pourtour circulaire 25 du haut-parleur 24 comporte une partie annulaire 46 qui s'étend tout autour du haut-parleur 24 en regard du joint 10 et des nervures interne et externe 30 et 32. La couronne 46 présente une face plane 48 sensiblement parallèle à la garniture 22 apte à venir en appui contre une face latérale 51 du joint 10. La face plane d'appui 48 comporte de plus au moins une nervure 50, s'étendant sensiblement perpendiculairement au plan de la face d'appui 48. La nervure 50 permet de mettre le joint 10 en surpression lors de la fixation de la garniture 22.

La garniture 22 comporte de plus une paroi circulaire 52 s'étendant sensiblement perpendiculairement au plan de la garniture 22 en regard de la nervure externe 32, du joint 10 et du support 25 de haut-parleur 24. La présence de cette paroi 52 présente l'avantage de protéger le haut-parleur 24 en évitant un ruissellement d'eau au niveau du joint 10.

Les figures 3 à 5 décrivent l'agencement du joint 10 de la figure 1 entre une garniture de porte 22 et un haut-parleur 24. Le joint 10' de la figure 2 est agencé entre la garniture 22 et le haut-parleur 24 de manière analogue, les zones planes 19,19' permettant alors d'assurer une pression de chaque côté des marches 16,16' et les pans biseautés 18,18' permettant d'assurer le montage du joint 10'.

Le joint selon l'invention présente donc l'avantage d'être simple et peu coûteux à fabriquer.

L'agencement de ce joint entre un haut-parleur et une garniture de porte pour étanchéifier cette zone est de plus particulièrement efficace. Les moyens prévus sur la garniture pour monter le joint sont de conception simple, permettent un montage aisé du joint et assurent une très bonne étanchéité du joint au niveau de ses extrémités.

## Revendications

1. Agencement à l'intérieur d'un véhicule automobile de moyens d'étanchéité entre un haut-parleur (24) et une garniture (22) de porte comprenant un joint (10,10') d'étanchéité linéaire (10, 10') présentant une section rectangulaire constante sur sa longueur, le joint (10,10') présentant une première extrémité
(12) comportant sur une première face (14) du joint une première marche (16) et un premier pan biseauté (18) et une deuxième extrémité (12') comportant également sur une deuxième face (14'), opposée à la première face (14), une deuxième marche (16') et un deuxième pan biseauté (18'), les extrémités (12,12') étant aptes à coopérer l'une avec l'autre pour former un joint circulaire, le joint étant disposé entre un élément périphérique (25) du haut-parleur (24) et la garniture de porte (22), **caractérisée en ce que** la garniture (22) comporte autour d'une grille de haut-parleur (26),
une nervure interne (30) et une nervure externe (32) globalement circulaires concentriques entre lesquelles est reçu le joint d'étanchéité (10,10'), les nervures interne (30) et externe (32) comportant une zone de maintien (42) localisée conformée pour assurer le maintien des extrémités (12,12') du joint (10,10'), le joint étant inséré entre les nervures interne (30) et externe (32) de sorte que la première face (14) est en contact avec une face interne (44) de la nervure externe (32) et la deuxième face (14') du joint (10) est en contact avec une face externe (34) de la nervure interne (30).

2. Agencement de moyens d'étanchéité selon la revendication précédente, **caractérisé en ce que** les extrémités (12,12') comportent en outre, entre la marche (16,16') et le pan biseauté (18,18'), une zone intermédiaire (19,19') dont la surface est comprise dans un plan sensiblement parallèle aux première (14) et deuxième (14') faces du joint.

3. Agencement de moyens d'étanchéité selon l'une quelconque des revendications précédentes, **caractérisé en ce que** la zone de maintien (42) des extrémités (12,12') du joint (10,10') est délimitée par un élément formant saillie (36), présentant une rampe (36b) orientée selon une tangente en un point (P) de la nervure interne (30) situé à la limite de la zone de maintien (42) et une paroi (36a) orientée selon un rayon de la nervure interne (30) et par une butée (40) formée sur une face externe (45) de la nervure externe (32), à distance de l'élément en saillie (36), la zone de maintien (42) comportant en outre une déformation de la nervure externe (32) débutant, sensiblement en regard de la rampe (36b) de l'élément en saillie (36), par un bossage (38) dirigé vers l'extérieur qui s'étend le long de nervure externe (32) jusqu'à la butée (40) de façon que la zone de maintien (42) soit apte à accueillir les extrémités (12,12') du joint (10,10') en compression l'une contre l'autre.

4. Agencement de moyens d'étanchéité selon l'une quelconque des revendications précédentes, **caractérisé en ce que** dans la zone de maintien (42),
- la première extrémité (12) et la deuxième extrémité (12') du joint (10,10') sont en appui l'une contre l'autre, la première extrémité (12) étant en contact avec la nervure interne (30) et la deuxième extrémité (12') étant en contact avec le bossage (38) de la nervure externe (32) et une première paroi terminale (20) de la première extrémité (12) étant en appui contre la paroi (36a) de l'élément en saillie (36) et une deuxième paroi terminale (20') de la deuxième extrémité (12') étant en appui contre la butée (40),
- une première partie de contact (14c) de la première extrémité (12) située en amont de la première marche (16) est en appui contre le deuxième pan biseauté (18') de la deuxième extrémité (12') et une deuxième partie de contact (14'c) du joint située en amont de la deuxième marche(16') de la deuxième extrémité (12') est en appui contre le premier pan biseauté (18) de la première extrémité (12),
- une portion de la deuxième face (14') du joint située en amont de la deuxième partie de contact (14'c) de la deuxième extrémité (12') est en appui contre la rampe (36b) de l'élément en saillie (36).

5. Agencement de moyens d'étanchéité selon l'une quelconque des revendications précédentes, **caractérisé en ce que** la dimension de l'espace (d) entre la nervure interne (30) et la nervure externe (32) en dehors de la zone de maintien (42) est sensiblement égale à l'épaisseur du joint (E).

6. Agencement de moyens d'étanchéité selon l'une quelconque des revendications précédentes **caractérisé en ce que** la dimension la plus grande (D) entre la nervure interne (30) et la nervure externe (32) dans la zone de maintien (42) est sensiblement égale à la somme de l'épaisseur (E) du joint en dehors de ses extrémités (12,12') et de l'épaisseur du joint (e ) au niveau du pan biseauté (18,18').

7. Agencement de moyens d'étanchéité selon l'une quelconque des revendications précédentes, **caractérisé en ce que** l'élément périphérique (25) du haut-parleur (24) situé en regard de la nervure interne (30) et de la nervure externe (32), comporte une zone d'appui annulaire (48) destinée à coopérer avec une face latérale (51) du joint (10,10').

8. Agencement de moyens d'étanchéité selon la revendication 7, **caractérisé en ce que** la zone d'appui annulaire (48) comporte au moins une nervure (50) qui s'étend sensiblement perpendiculairement par rapport à la zone d'appui (48) qui est destinée à pénétrer dans la face latérale (51) du joint (10,10') pour le mettre en surpression.

9. Agencement de moyens d'étanchéité selon l'une quelconque des revendications précédentes, **caractérisé en ce que** la garniture (22) comporte une paroi circulaire (52) s'étendant sensiblement perpendiculairement par rapport à la garniture (22) en regard du joint (10,10') et de l'élément périphérique (25) du haut-parleur (24) de façon à limiter un ruissellement d'eau à l'intérieur du haut-parleur (24).

## Patentansprüche

1. Anordnung von Dichtungsmitteln zwischen einem Lautsprecher (24) und einer Türverkleidung (22) im Inneren eines Kraftfahrzeugs, umfassend eine Linear (10, 10') dichtung (10, 10'), die einen konstanten rechteckigen Querschnitt auf ihrer Länge aufweist, wobei die Dichtung (10, 10`) ein erstes Ende (12), umfassend auf einer ersten Seite (14) der Dichtung eine erste Stufe (16) und eine erste abgeschrägte Fläche (18), und ein zweites Ende (12') aufweist, umfassend auf einer zweiten Seite (14'), die der ersten Seite (14) gegenüberliegt, ebenfalls eine zweite Stufe (16') und eine zweite abgeschrägte Fläche (18`), wobei die Enden (12, 12`) geeignet sind, miteinander zusammenzuwirken, um einen Dichtungsring zu bilden, wobei die Dichtung zwischen einem Umfangselement (25) des Lautsprechers (24) und der Türverkleidung (22) angeordnet ist, **dadurch gekennzeichnet, dass** die Verkleidung (22) um ein Lautsprechergitter (26) eine innere Rippe (30) und eine äußere Rippe (32) umfasst, die global kreisförmig konzentrisch sind, zwischen denen die Dichtung (10, 10') aufgenommen wird, wobei die inneren (30) und äußeren Rippen (32) eine lokalisierte Haltezone (42) umfassen, die dazu vorgesehen ist, den Halt der Enden (12, 12`) der Dichtung (10, 10`) zu gewährleisten, wobei die Dichtung zwischen den inneren (30) und äußeren Rippen (32) derart eingesetzt ist, dass die erste Seite (14) mit einer Innenseite (44) der äußeren Rippe (32) in Kontakt ist, und die zweite Seite (14') der Dichtung (10) mit einer Außenseite (34) der inneren Rippe (30) in Kontakt ist.

2. Anordnung von Dichtungsmitteln nach dem vorhergehenden Anspruch, **dadurch gekennzeichnet, dass** die Enden (12, 12') ferner zwischen der Stufe (16, 16') und der abgeschrägten Fläche (18, 18`) eine Zwischenzone (19, 19') umfassen, deren Fläche in einer Ebene im Wesentlichen parallel zu der ersten (14) und zweiten (14') Seite der Dichtung enthalten ist.

3. Anordnung von Dichtungsmitteln nach einem der vorhergehenden Ansprüche, **dadurch gekennzeichnet, dass** die Haltezone (42) der Enden (12, 12') der Dichtung (10, 10`) durch ein einen Vorsprung (36) bildendes Element, umfassend eine Rampe (36b), die entlang einer Tangente in einem Punkt (P) der inneren Rippe (30), der sich an der Grenze der Haltezone (42) befindet, ausgerichtet ist, und eine Wand (36a), die entlang eines Radius der inneren Rippe (30) ausgerichtet ist, und durch einen Anschlag (40) begrenzt ist, der auf einer Außenseite (45) der äußeren Rippe (32) in einem Abstand zu dem vorspringenden Element (36) ausgebildet ist, wobei die Haltezone (42) ferner eine Verformung der äußeren Rippe (32) umfasst, die im Wesentlichen gegenüber der Rampe (36b) des vorspringenden Elements (36) mit einem Wulst (38) beginnt, der nach außen gerichtet ist und sich entlang der äußeren Rippe (32) bis zu dem Anschlag (40) erstreckt, so dass die Haltezone (42) geeignet ist, die Enden (12, 12') der Dichtung (10, 10') durch Zusammendrücken gegeneinander aufzunehmen.

4. Anordnung von Dichtungsmitteln nach einem der vorhergehenden Ansprüche, **dadurch gekennzeichnet, dass** in der Haltezone (42)
- das erste Ende (12) und das zweite Ende (12`) der Dichtung (10, 10') aneinander anliegend sind, wobei das erste Ende (12) mit der inneren Rippe (30) in Kontakt ist und das zweite Ende (12') mit dem Wulst (38) der äußeren Rippe (32) in Kontakt ist, und wobei eine erste Endwand (20) des ersten Endes (12) an der Wand (36a) des vorspringenden Elements (36) anliegt, und eine zweite Endwand (20') des zweiten Endes (12`) an dem Anschlag (40) anliegt,
- wobei ein erster Kontaktteil (14c) des ersten Endes (12), der sich stromaufwärts zu der ersten Stufe (16) befindet, an der zweiten abgeschrägten Fläche (18') des zweiten Endes (12') anliegt, und ein zweiter Kontaktteil (14'c) der der Dichtung, der sich stromaufwärts zu der zweiten Stufe (16') des zweiten Endes (12`) befindet, an der ersten abgeschrägten Fläche (18) des ersten Endes (12) anliegt,
- wobei ein Abschnitt der zweiten Seite (14') der Dichtung, der sich stromaufwärts zu dem zweiten Kontaktteil (14'c) des zweiten Endes (12`) befindet, an der Rampe (36b) des vorspringenden Elements (36) anliegt.

5. Anordnung von Dichtungsmitteln nach einem der vorhergehenden Ansprüche, **dadurch gekennzeichnet, dass** die Dimension des Raums (d) zwischen der inneren Rippe (30) und der äußeren Rippe (32) außerhalb der Haltezone (42) im Wesentlichen gleich der Dicke der Dichtung (E) ist.

6. Anordnung von Dichtungsmitteln nach einem der vorhergehenden Ansprüche, **dadurch gekennzeichnet, dass** die größte Dimension (D) zwischen der inneren Rippe (30) und der äußeren Rippe (32) in der Haltezone (42) im Wesentlichen gleich der Summe der Dicke (E) der Dichtung außerhalb ihrer Enden (12, 12') und der Dicke der Dichtung (e) im Bereich der abgeschrägten Fläche (18, 18`) ist.

7. Anordnung von Dichtungsmitteln nach einem der vorhergehenden Ansprüche, **dadurch gekennzeichnet, dass** das Umfangselement (25) des Lautsprechers (24), das sich gegenüber der inneren Rippe (30) und der äußeren Rippe (32) befindet, eine ringförmige Auflagezone (48) umfasst, die dazu bestimmt ist, mit einer Seitenfläche (51) der Dichtung (10, 10') zusammenzuwirken.

8. Anordnung von Dichtungsmitteln nach Anspruch 7, **dadurch gekennzeichnet, dass** die ringförmige Auflagezone (48) mindestens eine Rippe (50) umfasst, die sich im Wesentlichen senkrecht zu der Auflagezone (48) erstreckt, die dazu bestimmt ist, in die Seitenfläche (51) der Dichtung (10, 10`) einzudringen, um sie unter Überdruck zu setzen.

9. Anordnung von Dichtungsmitteln nach einem der vorhergehenden Ansprüche, **dadurch gekennzeichnet, dass** die Verkleidung (22) eine kreisförmige Wand (52) umfasst, die sich im Wesentlichen senkrecht zu der Verkleidung (22) gegenüber der Dichtung (10, 10') und dem Umfangselement (25) des Lautsprechers (24) erstreckt, um ein Sickern von Wasser in das Innere des Lautsprechers (24) zu begrenzen.

## Claims

1. Arrangement inside a motor vehicle of sealing means between a loudspeaker (24) and a door lining (22) comprising a linear (10, 10') seal (10, 10') having a constant rectangular section along its length, the seal (10, 10') having a first end (12) comprising, on a first face (14) of the seal, a first step (16) and a first beveled face (18) and a second end (12') also comprising, on a second face (14'), opposite the first face (14), a second step (16') and a second beveled face (18'), the ends (12, 12') being able to cooperate with one another to form a circular seal, the seal being arranged between a peripheral element (25) of the loudspeaker (24) and the door lining (22), **characterized in that** the lining (22) comprises, around a loudspeaker grille (26), an inner ridge (30) and an outer ridge (32) that are globally circular and concentric, between which the seal (10, 10') is received, the inner (30) and outer (32) ridges comprising a localized holding zone (42) configured to ensure that the ends (12, 12') of the seal (10, 10') are held, the seal being inserted between the inner (30) and outer (32) ridges such that the first face (14) is in contact with an inner face (44) of the outer ridge (32) and the second face (14') of the seal (10) is in contact with an outer face (34) of the inner ridge (30).

2. Arrangement of sealing means according to the preceding claim, **characterized in that** the ends (12, 12') further comprise, between the step (16, 16') and the beveled face (18, 18'), an intermediate zone (19, 19') whose surface is contained in a plane substantially parallel to the first (14) and second (14') faces of the seal.

3. Arrangement of sealing means according to either of the preceding claims, **characterized in that** the holding zone (42) for the ends (12, 12') of the seal (10, 10') is delimited by a protrusion-forming element (36), having a ramp (36b) oriented tangentially at a point (P) of the inner ridge (30) situated at the limit of the holding zone (42) and a wall (36a) oriented on a radius of the inner ridge (30) and by an abutment (40) formed on an outer face (45) of the outer ridge (32), at a distance from the protruding element (36), the holding zone (42) further comprising a deformation of the outer ridge (32) beginning, substantially facing the ramp (36b) of the protruding element (36), with a boss (38) directed outward which extends along the outer ridge (32) to the abutment (40) so that the holding zone (42) is able to accommodate the ends (12, 12') of the seal (10, 10') compressed against one another.

4. Arrangement of sealing means according to any one of the preceding claims, **characterized in that** in the holding zone (42),
- the first end (12) and the second end (12') of the seal (10, 10') bear against one another, the first end (12) being in contact with the inner ridge (30) and the second end (12') being in contact with the boss (38) of the outer ridge (32) and a first terminal wall (20) of the first end (12) bearing against the wall (36a) of the protruding element (36) and a second terminal wall (20') of the second end (12') bearing against the abutment (40),
- a first contact part (14c) of the first end (12) situated upstream of the first step (16) bears against the second beveled face (18') of the second end (12') and a second contact part (14'c) of the seal situated upstream of the second step (16') of the second end (12') bears against the first beveled face (18) of the first end (12),
- a portion of the second face (14') of the seal situated upstream of the second contact part (14'c) of the second end (12') bears against the ramp (36b) of the protruding element (36).

5. Arrangement of sealing means according to any one of the preceding claims, **characterized in that** the dimension of the space (d) between the inner ridge (30) and the outer ridge (32) outside the holding zone (42) is substantially equal to the thickness of the seal (E).

6. Arrangement of sealing means according to any one of the preceding claims, **characterized in that** the greatest dimension (D) between the inner ridge (30) and the outer ridge (32) in the holding zone (42) is substantially equal to the sum of the thickness (E) of the seal outside its ends (12, 12') and of the thickness of the seal (e) at the beveled face (18, 18').

7. Arrangement of sealing means according to any one of the preceding claims, **characterized in that** the peripheral element (25) of the loudspeaker (24) situated facing the inner ridge (30) and the outer ridge (32) comprises an annular bearing zone (48) intended to cooperate with a lateral face (51) of the seal (10, 10').

8. Arrangement of sealing means according to Claim 7, **characterized in that** the annular bearing zone (48) comprises at least one ridge (50) which extends substantially perpendicularly relative to the bearing zone (48) which is intended to penetrate into the lateral face (51) of the seal (10, 10') to pressurize it.

9. Arrangement of sealing means according to any one of the preceding claims, **characterized in that** the lining (22) comprises a circular wall (52) extending substantially perpendicularly relative to the lining (22) facing the seal (10, 10') and the peripheral element (25) of the loudspeaker (24) so as to limit water runoff inside the loudspeaker (24).
